(19) Europäisches Patentamt
European Patent Office
Office européen des brevets

(11) **EP 2 466 372 A1**

(12) **EUROPEAN PATENT APPLICATION**

(43) Date of publication:
**20.06.2012 Bulletin 2012/25**

(51) Int Cl.:
*G02F 1/35* (2006.01)

(21) Application number: **10195374.3**

(22) Date of filing: **16.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Karpushko, Fedor V.**
**44269 Dortmund (DE)**

(72) Inventor: **Karpushko, Fedor V.**
**44269 Dortmund (DE)**

(74) Representative: **Isarpatent**
**Patent- und Rechtsanwälte**
**Friedrichstrasse 31**
**80801 München (DE)**

(54) **Laser system comprising a nonlinear device having a dual resonant resonator and method of operating the same**

(57) The invention provides a laser system comprising a nonlinear optical cavity (200) comprising cavity mirrors (210,220) positioned with respect to each other as to form a cavity configuration defining stable cavity eigenmodes at fundamental, incident upon, and combined, generated within the cavity, frequencies, said eigenmodes being spatially overlapped inside the nonlinear crystal (230), which is incorporated within the cavity and phase-matched appropriately for frequency conversion of circulating inside the cavity laser radiation; wherein for tuning the cavity eigenmodes and resonating the cavity simultaneously at more than one frequency, a dispersive plate (240) having temperature dependent spectral dispersion is provided inside the nonlinear optical cavity and temperature controlling means (242,245) is provided to regulate the temperature of the dispersive plate.

FIG. 2

EP 2 466 372 A1

**EP 2 466 372 A1**

**Description**

The present invention relates to a laser system for frequency conversion of laser radiation by means of non-linear interaction of the electromagnetic radiation with a suitable nonlinear optical medium. In particular, the invention relates to the Second Harmonic Generation (SHG) and Sum Frequency Generation (SFG) in external enhanced optical cavities.

In a frequency conversion process the efficiency of conversion of laser power at fundamental frequency(ies) into power at the combined frequency is strongly dependent on the intensity of radiation circulating within the nonlinear optical material employed for a conversion process. Known nonlinear optical materials may require interacting intensities within a range from $10^6$ to $10^8$ W/cm$^2$ for achieving practically significant conversion efficiencies.

Reaching sufficient efficiencies in a nonlinear frequency conversion process is particularly challenging for the case of continuous wave lasers having a moderate power since the intensities of continuous wave laser beams, even being tightly focused, are still at low end of the nonlinear interaction range and, hence, necessitate a further enhancement.

In a prior art, it has been proposed to place a nonlinear optical crystal within an external optical cavity (resonator), also called an enhanced cavity, that is tuned and kept locked in resonance with the fundamental wavelength of the laser beam incident upon the cavity. Such resonating the incident light in the external cavity provides many times increase for the radiation intensity at fundamental wavelength (frequency) circulating through the nonlinear crystal as compared with the intensity incident upon the cavity and results in enhancing the efficiency of a frequency conversion process. Such schemes are described, for example, in W.P. Risk, T.R. Gosnell and A.V. Nurmikko : Compact Blue-Green Lasers, Chapter 4 - "Resonator- enhanced SHG and SFG", Cambridge University Press, 2003.

It is also known (see A. Ashkin, G.D. Boyd, and J.M. Dziedzic - Resonant Optical Second Harmonic Generation and Mixing, IEEE Journal of Quantum Electronics, vol.QE-2, No 6, 109-122, 1965), that a further increase of the frequency conversion efficiency by exploiting an external optical cavity can be achieved by simultaneously resonating the radiation at all wavelengths interacting within nonlinear crystal. In the case of SHG this requires to resonate the cavity simultaneously at the fundamental and second harmonic frequencies. For the case of SFG this implies to resonate the cavity at two incident fundamental frequencies and (for even further increase of the non-linear process efficiency) at the sum frequency. Such approach of resonating an external optical cavity simultaneously at more than one wavelength (frequency), however, has specific issues associated with the dependence of the cavity optical path on radiation wavelength because of the dispersion of materials comprising the cavity. To overcome these issues, complicated and expensive techniques are required for locking the cavity resonances to the wavelength(s) of the interacting radiation. This restricts the use of such approach in increasing frequency conversion efficiencies for practical applications, in particular, for industrial products.

In US 5,394,414, a laser system has been proposed to generate the second harmonic or sum frequency radiation by resonating simultaneously two orthogonally polarized incident laser inputs within a monolithic crystal ring cavity via locking emission wavelength of each of the input lasers to the crystal cavity respective longitudinal mode spectral positions using two separate feedback electronic loops. This is so-called a "master-slave" system where the monolithic crystal cavity works as a spectral "master" and the input lasers are "slaves" whose spectral features (frequencies) are defined and driven by the master. Hence, in this approach, the choice of input wavelengths to be converted in higher frequency domain is naturally restricted to the monolithic crystal cavity longitudinal mode spectrum that is practically fixed by phase-matching condition for the non-linear frequency conversion process. In other words, the choice for the system outcome is dictated by a tool (monolithic crystal cavity) available for performing the task. This is disadvantageous for number of application that requires flexibility in selecting the spectral parameters of the laser radiation.

Secondly, there is no cavity design known by the prior art that allows simultaneous power enhancement of the fundamental and second harmonic radiation, or of fundamental and sum frequency radiation.

It is, therefore, an object of the present invention to introduce an efficient laser system for generating the radiation at combined frequencies that allows for simultaneously enhancing the laser power inside the nonlinear cavity at the fundamental and second harmonic frequencies, or at two independent fundamental frequencies, or at a fundamental and the sum radiation frequencies. Furthermore the proposed laser system for generating the radiation at combined frequencies uses input laser sources as independent "masters" that determine and control spectral position of an enhanced cavity eigenmodes for efficiently performing frequency conversion.

According to the present invention, this objective is achieved by a laser system of claim 1 for nonlinear frequency conversion which uses a dual resonant non-linear cavity formed by the cavity mirrors positioned with respect to each other as to form a cavity configuration defining stable cavity eigenmodes at fundamental, incident upon, and combined, generated within the cavity, frequencies, with such eigenmodes being spatially overlapped inside the nonlinear crystal, which is incorporated within the cavity and phase-matched appropriately for frequency conversion of circulating inside the cavity laser radiation, wherein, for tuning the cavity eigenmodes and resonating the cavity simultaneously at more than one frequency, a dispersive plate having temperature dependent spectral dispersion is placed inside the nonlinear optical cavity and temperature controlling means is provided to regulate the temperature of the dispersive plate. The

2

laser system further comprises laser sources to provide the radiation at fundamental frequencies, at least one actuator for precise controlling the optical path of the cavity and appropriate electronic means for locking the cavity to the frequency of an incident laser beam.

In the preferred embodiments of the present invention a dual resonant nonlinear cavity incorporates a dispersive plate made of an optically isotropic or birefringent material having, at different wavelengths, significantly different dependences of the refractive index on temperature. While keeping one of the cavity eigenmodes resonated due to locking it to the fundamental frequency of an incident laser beam, by regulating the temperature of the dispersive plate another cavity eigenmode is being tuned into a resonance with the second radiation frequency desired for resonating/enhancing inside the cavity. Thus, the cavity resonates and enhances simultaneously the radiation at two different frequencies providing for high efficiency of a combined frequency generation in an appropriately phase-matched nonlinear crystal. The temperature of the dispersive plate is regulated using a thermo-electrical device, thermally contacted to the dispersive plate, by means of a dispersive plate temperature control (DPTC) electronics receiving an input signal from a photodetector which monitors a resonance condition at one of the cavity eigenmodes. A dual resonant non-linear cavity can be configured as a two mirror standing wave cavity, or as a three mirror travelling wave ring cavity, or as a four mirror travelling wave bow-tie ring cavity.

Moreover, the invention provides corresponding methods as defined in claims 16, 17, 18.

BRIEF DESCRIPTION OF THE DRAWINGS

For a deeper understanding of advantages of the present invention, some embodiments will now be described, by way of example only, with reference to the attached figures, in which:

Fig. 1    shows a prior art for a nonlinear optical cavity resonating two incident laser beams known from US 5,394,414;

Fig. 2    shows a schematic diagram of a dual resonant nonlinear cavity for frequency conversion according to an embodiment of the present invention;

Fig. 3    shows a schematic diagram of a dual resonant nonlinear cavity for frequency conversion according to another embodiment of the present invention;

Fig. 4    shows a schematic diagram of a dual resonant nonlinear cavity for frequency conversion according to yet another embodiment of the present invention;

Fig. 5    shows a schematic view of a laser system for generating the radiation at the second harmonic frequency according to an embodiment of the present invention;

Fig. 6    shows a schematic view of a laser system for generating the radiation at the sum frequency according to an embodiment of the present invention;

Fig. 7    shows a schematic view of a laser system for generating the radiation at the sum frequency according to another embodiment of the present invention

DETAILED DESCRIPTION OF THE EMBODIMENTS

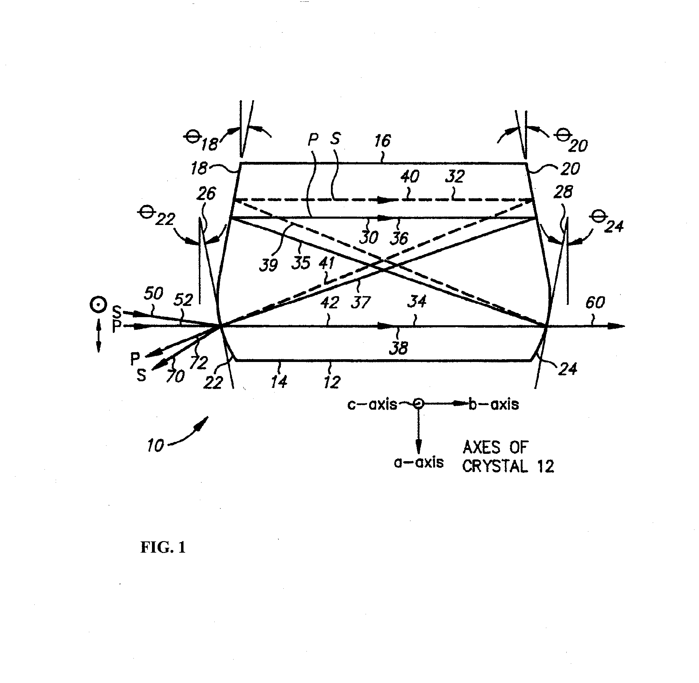

Fig. 1 shows an enhanced cavity design, as suggested in US 5,394,414, for simultaneous resonating two orthogonally polarized input beams. A monolithic bow-tie type ring cavity 10 is fabricated from nonlinear crystal material 12 that is shaped to form four reflective surfaces 18, 20, 22 and 24 oriented accordingly: a) with respect to each other to establish two closed beam paths 30 (comprising of path segments 34, 35, 36 and 37) and 32 (comprising of path segments 38, 39, 40 and 41) defining the cavity eigenmodes for two incident beams 50 and 52; and b) with respect to the crystallographic axes of the crystal to allow phase matching for a nonlinear frequency conversion process along overlapped beam path segments 34 and 38. The dielectric mirror coatings on the crystal surfaces 18, 20, 22 and 24 are provided to maximize the build-up (enhancement) of intensity in the cavity eigenmodes of beam paths 30 and 32 when exited by input beams 52 and 50, respectively.

While a number of applications requires a flexibility in selecting the spectral and polarization parameters of the laser radiation at fundamental and combined frequencies, in this design, that is extremely complicated and expensive to produce, there is no such flexibility provided with concern to the choices for the input beam properties except those confined to the monolithic cavity eigenmodes spectrum and, hence, restricted to the Type II nonlinear interaction crystalline material only suitable for such cavity design.

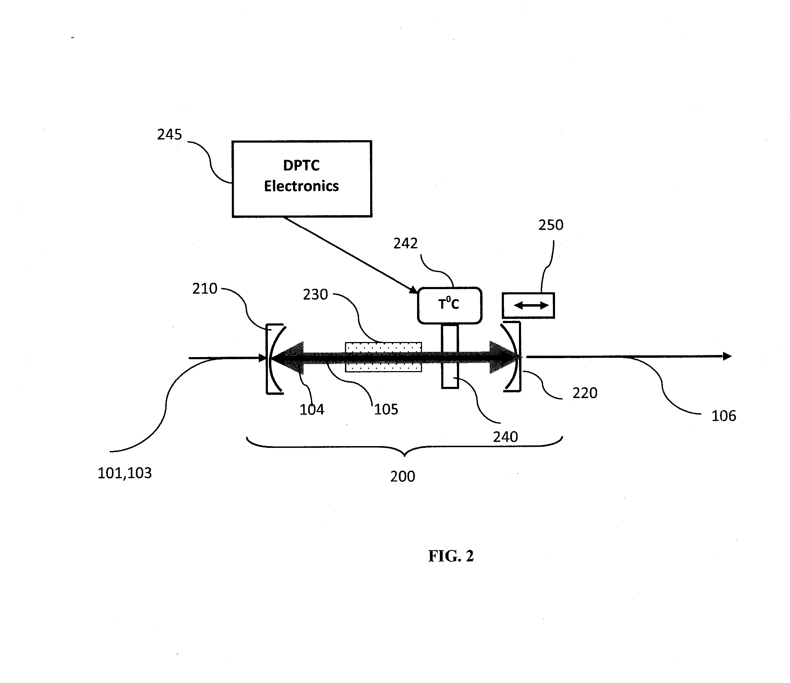

Fig. 2 illustrates an embodiment of a dual resonant nonlinear cavity for frequency conversion in accordance with the present invention. The cavity 200 is configured as a standing wave type cavity comprising the incoupling mirror 210, outcoupling mirror 220 both of concave geometry, and a nonlinear crystal 230 that is appropriately cut and tuned to satisfy phase-matching condition for a particular nonlinear frequency conversion process. The distance between the mirrors 210 and 220 and their curvatures are made as to determine stable cavity eigenmodes (shown here by the arrowed lines 104 and 105) within the spectral range covering the radiation at fundamental and combined frequencies. One of the cavity mirrors (in this example it is the outcoupling mirror 220) is attached to an actuator 250 which allows a precise control of the cavity optical path and locking one of the cavity eigenmodes (104) to the fundamental frequency of a laser beam, one of those (101 or 103) incident upon the incoupling mirror 210. In preferred embodiments the actuator 250 comprises of a piezo-electrical transducer (PZT).

For tuning the cavity eigenmodes, while keeping one of them (104) locked to an incident fundamental frequency beam, and for resonating the cavity simultaneously at more than one frequency/eigenmode (104 and 105 in this example), the nonlinear optical cavity 200 further comprises a dispersive plate 240 having temperature dependent spectral dispersion and temperature controlling means 242, 245 to regulate the temperature of the dispersive plate. In preferred embodiments the dispersive plate 240 is made of an optically isotropic or birefringent material that reveals at different wavelengths significantly distinct dependences of the refractive index on temperature. In particular, for the UV, visible and near infrared spectrum ranges such material can be fused silica, or crystalline quartz, or crystalline sapphire.

In preferred embodiments the dispersive plate temperature controlling means 242 comprises a thermo-electrical cooler/heater (TEC) thermally contacted with the dispersive plate 240 and a dispersive plate temperature control (DPTC) electronics 245.

The dielectric coatings of the cavity mirrors 210 and 220 are designed to optimize power enhancement at resonated cavity eigenmodes 104, 105 and to optimize, respectively, incoupling the resonated fundamental frequency radiation and outcoupling the resonated radiation at combined frequency. In particular, for the above optimization the incoupling mirror 210 has to be at the combined frequency as highly reflective (HR) as technologically possible and partially reflective (PR) at resonated fundamental frequency with a reflectivity value typically (but not mandatory) in the range 0.8 - 0.995, while the outcoupling mirror 220 needs to be HR at the resonated fundamental frequency and PR at the resonated combined frequency with a reflectivity value within the similar range of 0.8 - 0.995. The laser beam 106 outcoupled from the enhanced cavity contains, at most, the radiation at the combined frequency with some minor presence of the fundamental frequency radiation still leaking through the outcoupling mirror. The theoretical background for optimization of an enhanced cavity mirrors reflectivity employed for nonlinear frequency conversion can be found elsewhere (see, for example, the abovementioned reference by W.P. Risk, T.R. Gosnell and A.V. Nurmikko).

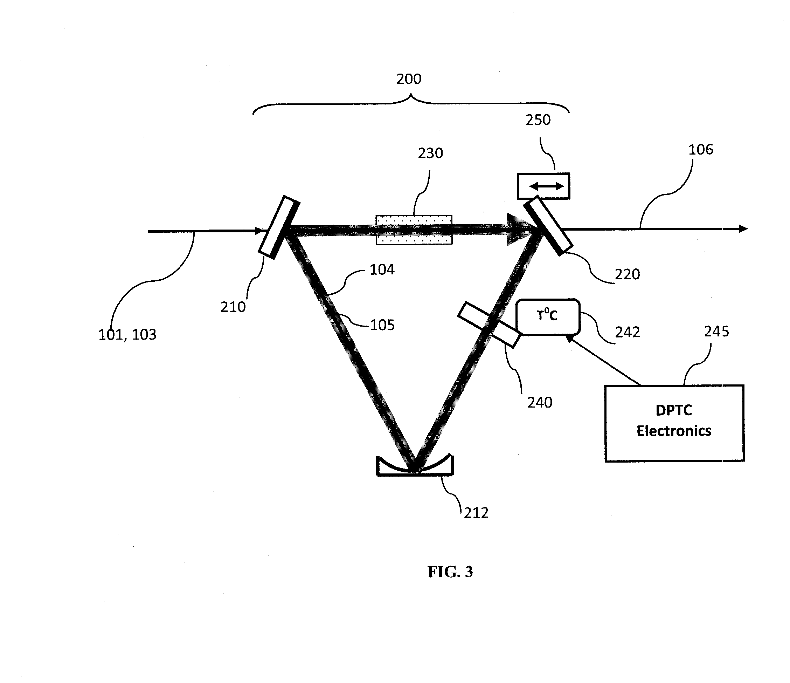

Fig. 3 shows another embodiment of a dual resonant nonlinear cavity 200 for frequency conversion in accordance with the present invention. This is a three mirror travelling wave ring cavity formed by incoupling mirror 210, outcoupling mirror 220 and by an additional folding mirror 212. In this embodiment the mirrors 210 and 220 are plano mirrors of the similar specification on reflectivity as in the case of Fig. 2 while other components in this layout are just the same as in the previous one. The folding concave mirror 212 is designed as HR at both simultaneously resonated frequencies. Its curvature and position is chosen as to define the cavity round trip optical path resulting in stable cavity eigenmodes with mode waist location close to the nonlinear crystal center.

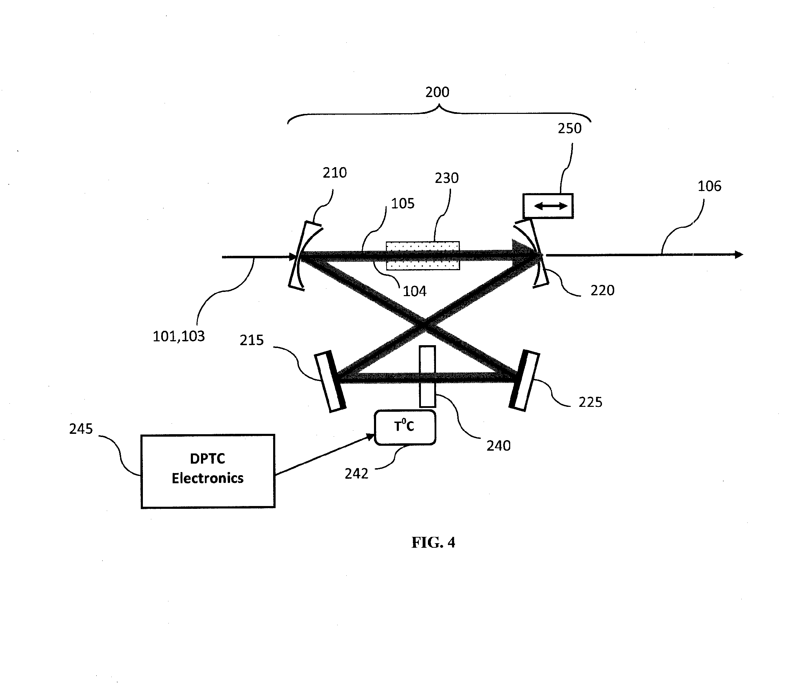

An embodiment of a dual resonant nonlinear cavity 200 as a four mirror travelling wave bow-tie cavity is illustrated by Fig. 4. As compared with a three mirror cavity of Fig. 3, a bow-tie nonlinear cavity is formed by incoupling mirror 210, outcoupling mirror 220 and by two additional folding mirrors 215 and 225. In this embodiment the mirrors 210 and 220 are concave mirrors of the similar specification on reflectivity as in the case of Fig. 2 while both folding mirrors 215 and 225 are plano ones designed as HR at both simultaneously resonated frequencies. Similarly to the previous embodiments the curvatures of concave incoupling (210) and outcoupling (220) mirrors and their positions are chosen as to determine the cavity round trip optical path resulting in stable cavity eigenmodes with mode waist location close to the nonlinear crystal center. Other numbered components in the layout of Fig. 4 are the same as in the embodiments of Fig. 2 and Fig. 3.

In the above embodiments the cavity eigenmodes at different resonated frequencies are spatially overlapped along the cavity beam path regardless to the polarization of radiation. Hence, there is no longer restriction on nonlinear crystal symmetry and on type of nonlinear interaction inside the crystal.

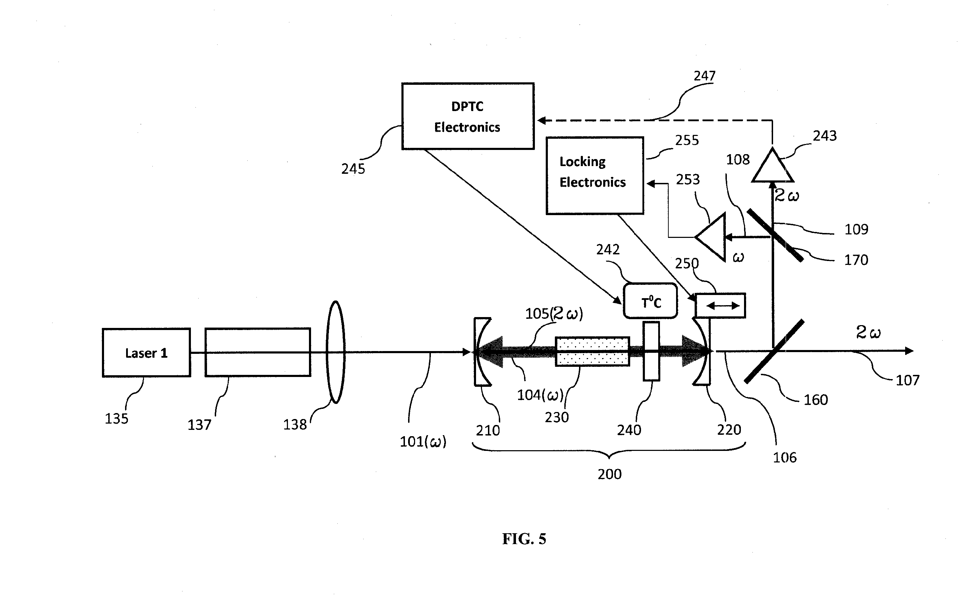

Now the operation of a laser system using a dual resonant nonlinear cavity may be understood. Fig. 5 illustrates an embodiment of such laser system configured for generating the second harmonic radiation. An input radiation 101 ($w$) at the fundamental frequency $w$ incident upon incoupling enhanced cavity mirror 210 is provided by a laser source 135, preferably diode pumped solid state (DPSS) laser or a diode laser. In some embodiments other type of lasers, for example, a gas type laser can serve as laser source 135. To match incident laser beam with the enhanced cavity fundamental ($TEM_{00}$) transverse mode volume, a beam shaping and focusing optics 138 is used. An appropriate optical isolator (Faraday Isolator) 137 prevents the fundamental frequency laser source 135 from undesirable optical back reflection that can occur from the enhanced cavity 200.

A beamsplitter 160 spectrally selects from the enhanced cavity outcoupled laser beam 106 a major portion of the radiation at the second harmonic frequency 2**w** and transmits it as the laser system output beam 107. Some minor part of the radiation at the second harmonic frequency 2**w** and a leaking from the cavity radiation at the fundamental frequency **w**, both being diverted by the beam splitter 160 from the laser output beam direction 107, are further spectrally separated by a beamsplitter 170 into two beams 108 (of **w**) and 109 (of 2**w**) incident upon the monitor photodetectors 253 and 243, respectively. A locking electronics unit 255 takes the photodetector signal (253), that reveals a cavity eigenmode status at the fundamental frequency **w,** and by processing it accordingly works out and applies a feedback command signal to an actuator 250 which controls the position of the cavity mirror 240, hence closing a feedback control loop. Once the control loop is switched on, one of the cavity eigenmodes, shown in Fig. 5 as 104(**w**), is locked to the incident beam fundamental frequency **w** and, thus, the cavity resonates the radiation at **w** making its intensity manyfold increased inside a nonlinear crystal 230 as compared with the intensity of incident beam 101 (**w**).

Now let's analyse the situation in numbers. Referencing to the Fig. 2 we define the following:

$L_a$ - being the distance between the cavity mirrors 210 and 220, excluding the thickness of the nonlinear crystal 230 and dispersive plate 240 and assuming the initial position of the mirror 220 when no voltage is applied to the (PZT) actuator 250;

$n_a$ - being the refractive index of the air (or another gas) filling the cavity;

$L_{nc}$ and $n_{nc}$ - being the thickness and refractive index of the nonlinear crystal 230 when the crystal is phase-matched for a particular nonlinear frequency conversion process. For simplicity we assume here Type I second harmonic generation process, hence, the crystal refractive index value $n_{nc}$ is the same at fundamental and the second harmonic wavelength (frequency).

Lp(T) and np(l, T) - the thickness and refractive index of the dispersive plate 240, both being dependent on the dispersive plate temperature T, and the refractive index also showing dependence on the radiation wavelength 1. Note, that the relation between the electromagnetic radiation frequency w and wavelength 1 in vacuum is given as 1 = *c*/w with c being the velocity of light. For estimate we take

$$L_p(T) = L_p^0 \cdot \{1 + aT \cdot (T - T_0)\}; \qquad n_p(1, T) = n_p(1,T) + dn/dT|_1 \cdot (T - T_0) , \qquad \text{(Eq. 1)}$$

where $L_p^0$ is the dispersive plate thickness at an initial temperature $T_0$, aT is the coefficient of thermal expansion, and $dn/dT|_1$ is a spectrally dependent temperature derivative of the dispersive plate refractive index.

With the above definitions the roundtrip optical path of the cavity can be written as

$$L_{opt}(1,T) = 2L_a \cdot n_a + 2L_{nc} \cdot n_{nc} + 2L_p(1,T) \cdot n_p(1, T) \qquad \text{(Eq. 2)}$$

giving, at some initial temperature To of the dispersive plate, an arbitrary position of $m_0^{-th}$ longitudinal eigenmode of the cavity with respect to the incident radiation wavelength 1:

$$L_{opt}(1,T_0) = (m_0 + s) \cdot 1, \qquad \text{(Eq. 3)}$$

here $m_0$ is an integer and $|s| \leq 0.5$.

Once the feedback control loop in the scheme of Fig. 5 is switched on, the Locking Electronics 255 provides a control signal to the actuator 250 that moves the mirror 220 by an appropriate span $dL(T_0)$ to make the optical path of the cavity exact integer of the incident wavelength l:

$$L_{opt}(1,T_0) - dL(T_0) = m_0 \cdot 1 \qquad (Eq.\ 4)$$

Thus, the enhanced cavity becomes locked to the incident radiation wavelength/frequency and it remains locked if the temperature of the dispersive plate is changed from To to another value T:

$$L_{opt}(1,T) - dL(T) = m_0 \cdot 1 \qquad (Eq.\ 5)$$

Obviously, the span value $dL(T)$ required to keep the cavity locked to the incident radiation wavelength is dependent on the dispersive plate temperature due to spectral dependence of the cavity optical path, as seen from Eq. 1. By subtracting Eq. 4 from Eq. 5

$$dL(T) - dL(T_0) = L_{opt}(1,T) - L_{opt}(1,T_0) \qquad (Eq.\ 6)$$

Once the cavity is locked at the incident wavelength 1, the next step is to change the dispersive plate temperature in order to tune another appropriate longitudinal eigenmode of the cavity into a resonance with the second wavelength of interest, in this case the wavelength of the second harmonic $l_2 = 1/2$. At this wavelength and at the initial dispersive plate temperature To the cavity optical path, in general, is not an integer of wavelength $l_2$, i.e.:

$$L_{opt}(l_2,T_0) - dL(T_0) = (m_2 + e) \cdot l_2, \qquad (Eq.\ 7)$$

with $m_2$ being the nearest integer and $|e| \leq 0.5$. Changing the dispersive plate temperature T we compensate for non-integer part $|e|$ by spanning the cavity optical path and, therefore, bring the cavity in resonance condition at the second harmonic wavelength:

$$L_{opt}(l_2,T) - dL(T) = m_2 \cdot l_2, \qquad (Eq.\ 8)$$

In the embodiment of Fig. 5, the temperature of the dispersive plate 240 is regulated by a thermoelectric device 242 via DPTC Electronics 245, and the resonance at the second harmonic wavelength $l_2$ is monitored by a photodetector 243. With an appropriate algorithm and by connecting the photodetector 243 directly to DPTC Electronics 245, as shown by dashed arrow line 247, tuning the cavity to simultaneously resonate at the second harmonic wavelength can be done automatically.

Once the cavity tuned to resonate at both the fundamental and the second harmonic frequencies, the conversion efficiency is increased and, therefore, a required output power at the second harmonic can be achieved at lower inputs. Another benefit of having the second harmonic radiation resonated at one of the cavity eigenmodes is that the beam quality of second harmonic radiation outcoming from the cavity is preserved by the cavity $TEM_{00}$ transverse mode structure, regardless to the walk-off effect inside a nonlinear crystal when the latter operates at an arbitrary cut angle in a geometry of a critical phase-matching.

Combining Eq. 2, 6, 7, 8 and accounting for Eq. 1 one receives an estimate formula for the range $_D T$ of temperature change of the dispersive plate required to bring the nonlinear cavity 200 about a condition of dual resonance, to simultaneously resonate and enhance the intracavity circulating radiation power at fundamental and at the second harmonic frequencies:

$$\mathrm{DT} \equiv T - T_0 \approx (|e| \cdot l_2 / L_p^0) \cdot \{aT \cdot [n_p(l_2,T) - n_p(l,T)] + (dn/dT|_{l2} - dn/dT|_l )\}^{-1}$$

$$(\text{Eq. 9})$$

In practice, $aT \cdot [np(l_2,T) - n_p(l,T)] \ll (dn/dT|_{l2} - dn/dT|_l)$. Assuming an initial $|e|$ value close to 0.5, Eq. 9 further then reduces to:

$$\mathrm{DT} \approx (l_2/2 \cdot L_p^0) \cdot (dn/dT|_{l2} - dn/dT|_l )^{-1} \qquad (\text{Eq. 10})$$

Combining Eq. 10 with Eq. 6 and taking into account Eq. 1, for the minimal travel range of the cavity mirror 220 one obtains:

$$dL(T) - dL(T_0) > l_2 \cdot \{aT \cdot n_p(l,T0) + dn/dT|_l\} \cdot (dn/dT|_{l2} - dn/dT|_l)^{-1} \qquad (\text{Eq. 11})$$

Obviously, the larger difference of temperature dependences of a dispersive plate refractive index $(dn/dT|_{l2} - dn/dT|_l)$ at two resonating wavelength is, the smaller ranges of temperature change and the cavity mirror movement are required.

*An example:* a dispersive plate of thickness $L_p^0 = 3$ mm is made of fused silica, $n_p(l,T0) = 1.46$, $aT = 0.5 \cdot 10^{-6}$, $dn/dT|_l = 10^{-5}$, $(dn/dT|_{0.266} - dn/dT|_{0.532}) = 3.1 \cdot 10^{-6}$

To meet the condition for simultaneously resonating an enhanced cavity at 532nm wavelength as fundamental and 266nm as the second harmonic the dispersive plate temperature must be changeable over the range $DT \approx 15°C$ and PZT actuator must provide a movement of the cavity mirror 220 just up to 1 micron.

For embodiments of the laser system in question while using travelling wave enhanced cavity schemes as per Fig. 3 and 4, a required range of dispersive plate temperature change is two times higher than estimated by Eq. 10 due to single pass of the laser beam through the dispersive plate per roundtrip. The cavity mirror movement range is also needed to increase by factor of $1/_{\cos(F)}$ with F being the angle of incidence to the mirror. From practical point of view these ranges are surely feasible.

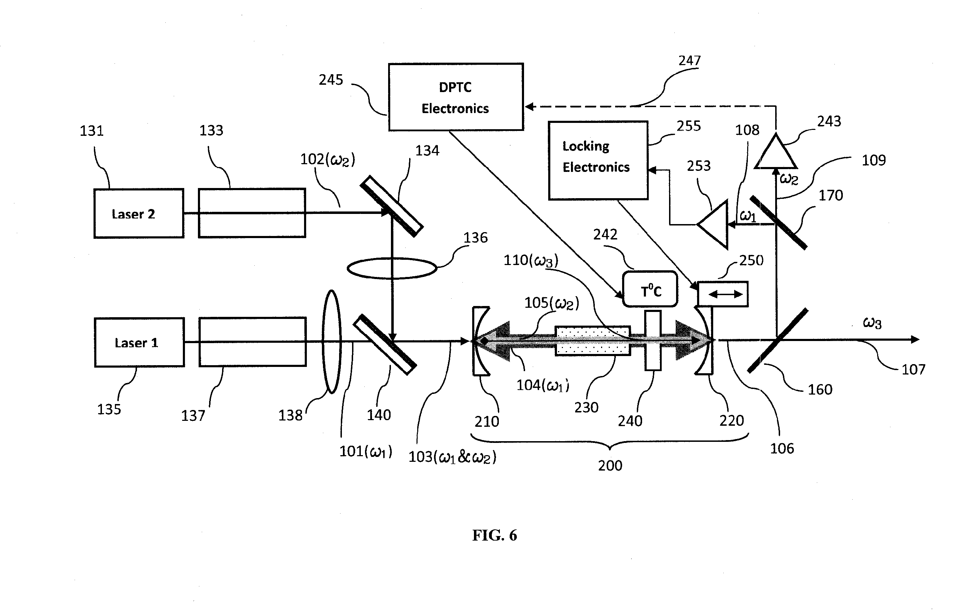

Fig. 6 illustrates an embodiment of a laser system configured for generating the sum frequency radiation. One input radiation $101(w_1)$ at the fundamental frequency $w_1$ is provided by a laser source 135, preferably a diode pumped solid state (DPSS) laser or a diode laser. In some embodiments other type of lasers, for example, a gas type laser can serve as laser source 135. The second input radiation $102(w_2)$ at the second fundamental frequency $w_2$ is provided by a laser source 131, preferably diode pumped solid state (DPSS) laser or a diode laser. In some embodiments other type of lasers, for example, a gas type laser can serve as laser source 131. Both inputs are combined by a turning mirror 134 and a dichroic mirror 140 into one beam $103(w_1 \& w_2)$ incident upon the incoupling mirror 210 of the enhanced cavity 200. To match incident laser beam with the enhanced cavity fundamental $(TEM_{00})$ transverse mode volume, a beam shaping and focusing optics 136 and 138 is used. An appropriate optical isolators (Faraday Isolators) 137 and 133 prevent the fundamental frequency laser sources 135 and 131 from undesirable optical back reflection that can occur from the enhanced cavity 200.

A beamsplitter 160 spectrally selects from the enhanced cavity outcoupled laser beam 106 the radiation at the sum frequency $w_3 = w_1 + w_2$ and transmits it as the laser system output beam 107. The radiation at the fundamental frequencies $w_1$ and $w_2$ leaking from the cavity through outcoupling mirror 220 are diverted by the beam splitter 160 from the laser output beam direction 107, are further spectrally separated by a beamsplitter 170 into two beams 108 (of $w_1$) and 109 (of $w_2$) incident upon the monitor photodetectors 253 and 243, respectively. A locking electronics unit 255 takes the photodetector signal (253), that reveals a cavity eigenmode status at the fundamental frequency $w_1$, and by processing it accordingly works out and applies a feedback command signal to an actuator 250 which controls the position of the cavity mirror 240, hence closing a feedback control loop. Once the control loop is switched on, one of the cavity eigenmodes, shown in Fig. 6 as $104(w_1)$, is locked to the incident beam fundamental frequency $w_1$ and, thus, the cavity resonates the radiation at $w_1$ making its intensity manyfold increased inside a nonlinear crystal 230 as compared with the intensity of incident beam $101(w_1)$.

Once the cavity is locked at the incident wavelength $l_1 = c/w_1$ the next step is to change the dispersive plate temperature in order to tune another appropriate longitudinal eigenmode of the cavity into a resonance with the second wavelength of interest, in this case the wavelength of the second fundamental wavelength $l_2 = c/w_2$. This can be made in a similar way as described for the case of the second harmonic generation by an embodiment of the invention as per Fig. 5 with the only difference that cavity 200 in Fig. 6 now resonates simultaneously at two independent fundamental wavelengths, providing for a good conversion efficiency for sum frequency generation process.

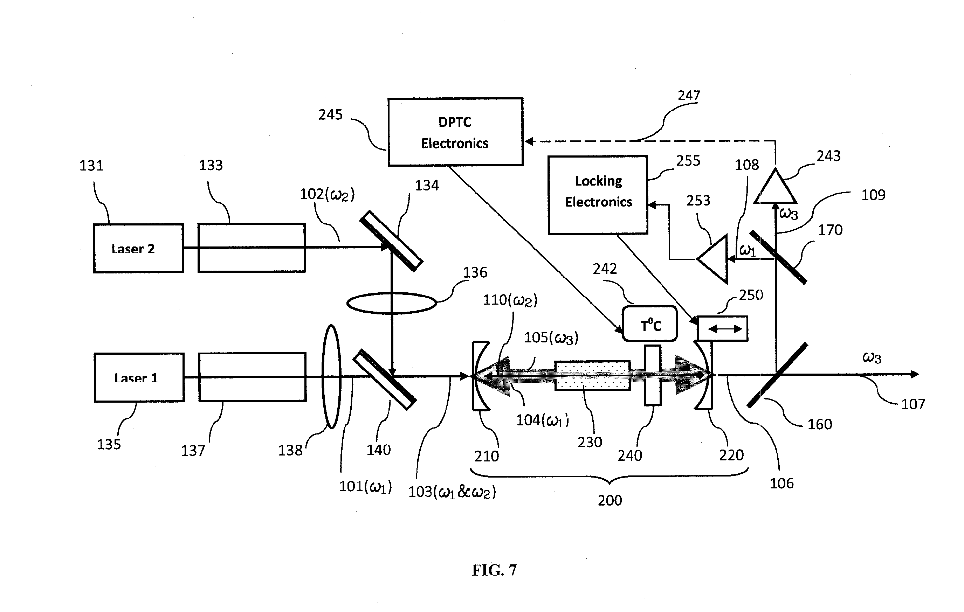

Fig. 7 shows another modification of this system used for sum frequency generation in which the temperature of the dispersive plate inside cavity is changed such as to tune one of the cavity longitudinal eigenmodes in resonance with wavelength of the sum frequency radiation $l_3 = c/(w_1 + w_2)$ while keeping the cavity locked to the fundamental frequency $w_1$. In this case a beamsplitter 160 takes a minor portion of the radiation at sum frequency $w_3$ from the output and directs it to a photodetector 243. The rest of operational procedure remains the same as for previous cases.

Another benefit of having the sum frequency radiation resonated at one of the cavity eigenmodes, as per embodiment of Fig. 7, is that the beam quality of sum frequency radiation outcoming from the cavity is preserved by the cavity $TEM_{00}$ transverse mode structure, regardless to the walk-off effect inside a nonlinear crystal when it operates at an arbitrary cut angle, hence, in a critical phase-matching geometry.

It should be apparent to a skilled reader that the implementation of the invention is not limited to the specific embodiments detailed above, but may be modified and/or adapted for a particular application without departure from the scope of the present invention as set forth in the following claims.

**Claims**

1. A laser system comprising:

   an nonlinear optical cavity comprising cavity mirrors positioned with respect to each other as to form a cavity configuration defining stable cavity eigenmodes at fundamental, incident upon, and combined, generated within the cavity, frequencies, said eigenmodes being spatially overlapped inside the nonlinear crystal, which is incorporated within the cavity and phase-matched appropriately for frequency conversion of circulating inside the cavity laser radiation;
   **wherein**
   for tuning the cavity eigenmodes and resonating the cavity simultaneously at more than one frequency, a dispersive plate having temperature dependent spectral dispersion is provided inside the nonlinear optical cavity and temperature controlling means is provided to regulate the temperature of the dispersive plate.

2. The system as claimed in Claim 1, wherein the enhanced cavity is configured as a two mirror standing wave cavity, or as a three mirror travelling wave ring cavity, or as a four mirror travelling wave bow-tie ring cavity.

3. The system as claimed in Claims 1-2, wherein a dispersive plate having temperature dependent spectral dispersion comprises of an optically isotropic or birefringent material owning, at different wavelengths, significantly different dependences of the refractive index on temperature.

4. The system as claimed in Claim 1-3, wherein a dispersive plate having temperature dependent spectral dispersion comprises of fused silica, or of crystalline quartz, or of crystalline sapphire.

5. The system as claimed in Claims 1- 4, wherein temperature controlling means to regulate the temperature of the dispersive plate comprise a thermo-electrical device thermally contacted with the dispersive plate and dispersive plate temperature control (DPTC) electronics receiving an input signal from a photo-detector which monitors a resonance condition at one of the cavity eigenmodes.

6. The system as claimed in Claims 1-5 for generation of laser radiation at the second harmonic frequency further comprising a laser source providing incident upon the enhanced cavity radiation at the corresponding fundamental frequency.

7. The system as claimed in Claims 1-5 for generation of laser radiation at the sum frequency further comprising two laser sources providing incident upon the enhanced cavity radiation at two different fundamental frequencies.

8. The system as claimed in Claims 1-6, wherein a laser source providing the incident upon the cavity fundamental frequency laser beam is produced by a diode pumped solid state laser, or by a diode laser.

9. The system as claimed in Claims 1-5 and 7, wherein two laser sources providing the incident upon the cavity laser beams are produced by diode pumped solid state lasers or by diode lasers.

10. The system as claimed in Claims 1-5 and 7, wherein one of two laser sources providing the incident upon the cavity laser beams is produced by a diode pumped solid state laser while another is produced by a diode laser.

11. The system as claimed in Claims 1-6 and 8, wherein one of the cavity eigenmodes is locked and resonated at the fundamental frequency of the incident laser beam, and another cavity eigenmode is tuned by the temperature controlled dispersive plate into a resonance with the frequency of the second harmonic radiation generated within the cavity by a non-linear crystal.

12. The system as claimed in Claims 1-5, 7 and 9, wherein one of the cavity eigenmodes is locked and resonated at the fundamental frequency of the first incident laser beam, and another cavity eigenmode is tuned by the temperature controlled dispersive plate into a resonance with the fundamental frequency of the second incident laser beam.

13. The system as claimed in Claims 1-5, 7 and 9, wherein one of the cavity eigenmodes is locked and resonated at the fundamental frequency of one of two incident laser beams, and another cavity eigenmode is tuned by the temperature controlled dispersive plate into a resonance with the frequency of sum frequency radiation generated within the cavity by a non-linear crystal.

14. The system as claimed in Claims 11-13, wherein for locking one of the cavity eigenmodes to the fundamental frequency of an incident laser beam, at least one of the enhanced cavity mirror's position is regulated by an actuator receiving a controlling electrical signal from a photoelectrical feedback circuitry via a locking electronics device.

15. The system as claimed in Claim 14, wherein an actuator controlling the at least one of the enhanced cavity mirror's position comprises a piezo-electrical transducer (PZT).

16. A method for generating the radiation at second harmonic frequency comprising the steps of:

generating fundamental frequency laser radiation by a diode pumped solid state laser or by a diode laser;
coupling the fundamental frequency radiation into an nonlinear optical cavity comprising cavity mirrors positioned with respect to each other as to form a cavity configuration defining stable cavity eigenmodes at fundamental, incident upon, and second harmonic, generated within the cavity, frequencies, said eigenmodes being spatially overlapped inside the nonlinear crystal, which is incorporated within the cavity and phase-matched appropriately for frequency conversion of circulating inside the cavity laser radiation, wherein, for tuning the cavity eigenmodes a dispersive plate having temperature dependent spectral dispersion is provided inside the nonlinear optical cavity and temperature controlling means is provided to regulate the temperature of the dispersive plate;
resonating simultaneously radiation at fundamental and second harmonic frequencies inside an enhanced nonlinear optical cavity by:

- locking a cavity longitudinal mode to the incident fundamental frequency beam to resonate the cavity at the fundamental frequency; and
- tuning another longitudinal mode of the cavity into a resonance with the frequency of the second harmonic radiation, by changing the temperature of the dispersive plate;

outcoupling the second harmonic radiation from the enhanced cavity.

17. A method for generating the radiation at sum frequency comprising the steps of:

generating two fundamental frequency laser radiation beams by diode pumped solid state laser(s) and/or by a diode laser(s);
coupling the fundamental frequency radiation into an nonlinear optical cavity comprising cavity mirrors positioned with respect to each other as to form a cavity configuration defining stable cavity eigenmodes at both fundamental radiation frequencies, said eigenmodes being spatially overlapped inside the nonlinear crystal, which is incorporated within the cavity and phase-matched appropriately for frequency conversion of circulating inside the

EP 2 466 372 A1

cavity laser radiation, wherein, for tuning the cavity eigenmodes a dispersive plate having temperature dependent spectral dispersion is provided inside the nonlinear optical cavity and temperature controlling means is provided to regulate the temperature of the dispersive plate;

resonating simultaneously radiation at both incident fundamental frequencies inside an enhanced nonlinear optical cavity by:

- locking a cavity longitudinal mode to one of incident fundamental frequency beam to resonate the cavity at one fundamental frequency; and
- tuning another longitudinal mode of the cavity into a resonance with the frequency of the second fundamental radiation beam, by changing the temperature of the dispersive plate;

outcoupling the sum frequency radiation from the enhanced cavity.

**18.** A method for generating the radiation at sum frequency comprising the steps of:

generating two fundamental frequency laser radiation beams by diode pumped solid state laser(s) and/or by a diode laser(s);

coupling the fundamental frequency radiation into an nonlinear optical cavity comprising cavity mirrors positioned with respect to each other as to form a cavity configuration defining stable cavity eigenmodes at a fundamental, incident upon, and sum, generated within the cavity, frequencies, said eigenmodes being spatially overlapped inside the nonlinear crystal, which is incorporated within the cavity and phase-matched appropriately for frequency conversion of circulating inside the cavity laser radiation, wherein, for tuning the cavity eigenmodes a dispersive plate having temperature dependent spectral dispersion is provided inside the nonlinear optical cavity and temperature controlling means is provided to regulate the temperature of the dispersive plate;

resonating simultaneously radiation at an incident fundamental and sum frequencies inside an enhanced nonlinear optical cavity by:

- locking a cavity longitudinal mode to an incident fundamental frequency beam to resonate the cavity at an fundamental frequency; and
- tuning another longitudinal mode of the cavity into a resonance with the sum frequency radiation beam, by changing the temperature of the dispersive plate;

outcoupling the sum frequency radiation from the enhanced cavity.

FIG. 1

EP 2 466 372 A1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 10 19 5374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 289 491 A (DIXON GEORGE J [US]) 22 February 1994 (1994-02-22) * column 8, line 67 - column 10, line 6; figure 6 * * column 11, line 18 - line 21 * ----- | 1-18 | INV. G02F1/35 |
| X | US 5 297 156 A (DEACON DAVID A G [US]) 22 March 1994 (1994-03-22) * the whole document * ----- | 1-18 | |
| A,D | "Resonator-enhanced SHG and SFG" In: W. P. Risk, T. R. Gosnell, A. V. Nurmikko: "Compact Blue-Green Lasers", 2003, Cambridge University Press, Cambridge, UK, XP9147772, pages 183-222, * the whole document * ----- | 1-18 | |

|  |  |  | TECHNICAL FIELDS SEARCHED (IPC) G02F H01S |
|---|---|---|---|

The present search report has been drawn up for all claims

| Place of search | Date of completion of the search | Examiner |
|---|---|---|
| Munich | 5 May 2011 | Frank, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 19 5374

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2011

| Patent document cited in search report | | Publication date | Patent family member(s) | | Publication date |
|---|---|---|---|---|---|
| US 5289491 | A | 22-02-1994 | CA | 2135396 A1 | 29-09-1994 |
| | | | EP | 0641492 A1 | 08-03-1995 |
| | | | JP | 7507882 T | 31-08-1995 |
| | | | WO | 9422188 A1 | 29-09-1994 |
| US 5297156 | A | 22-03-1994 | US | 5206868 A | 27-04-1993 |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5394414 A

**Non-patent literature cited in the description**

- Compact Blue-Green Lasers. **W.P. RISK ; T.R. GOSNELL ; A.V. NURMIKKO.** Resonator- enhanced SHG and SFG. Cambridge University Press, 2003

- **A. ASHKIN ; G.D. BOYD ; J.M. DZIEDZIC.** Resonant Optical Second Harmonic Generation and Mixing. *IEEE Journal of Quantum Electronics,* 1965, vol. QE-2 (6), 109-122